# EUROPEAN PATENT APPLICATION

(11) **EP 2 701 345 A1**
(43) Date of publication of application: **26.02.2014**
(21) Application number: 12785665.6
(22) Date of filing: 14.05.2012
(51) Int. Cl.: H04L 12/26, H04L 12/56

(54) **LOOPBACK TESTING METHOD, DEVICE AND SYSTEM**

(30) Priority: 16.05.2011 CN 201110126184
(71) Applicant: Huawei Technologies Co., Ltd., Shenzhen, Guangdong 518129 (CN)
(72) Inventor: MENG, Wanhong, Shenzhen, Guangdong 518129 (CN); LUO, Yong, Shenzhen, Guangdong 518129 (CN)
(74) Representative: Lord, Michael
(86) International application number: PCT/CN2012/075429
(87) International publication number: WO 2012/155817

(57) **Abstract**

The present invention discloses a loopback test method, apparatus and system, In the embodiments of the present invention, a receiving end, that is, a local end of test packets may determine, through a device ID of a source in loopback request signaling, a path leading to the source; the local end enters a loopback state through configuration signaling, so that the local end automatically loops back, through the path to the source, a subsequently received test packet sent by the source; and finally the source can count, within a specified time period, test packets looped back by the local end, and calculate, according to the count result, bandwidth of the path.

## Description

### CROSS-REFERENCE TO RELATED APPLICATIONS

This application claims priority to Chinese Patent Application No. 201110126184.2, filed with the Chinese Patent Office on May 16, 2011 and entitled "LOOPBACK TEST METHOD, APPARATUS AND SYSTEM", which is incorporated herein by reference in its entirety.

### TECHNICAL FIELD

The present invention relates to the field of communications technologies about a multi-protocol label switching network, and in particular, to a loopback test method, apparatus and system.

### BACKGROUND

Multi-protocol label switching (Multi-Protocol Label Switching, MPLS) is a system for fast data packet switching and routing, and can bear multiple types of network layer protocols. The core technology of the MPLS is to map an IP (Internet Protocol, Internet protocol) address of a core network node to a simple label (Label) with fixed length, and insert the Label in each data packet, to replace IP forwarding with label switching.

In an MPLS network, data transmission occurs on a label switched path (Label Switched Path, LSP). The LSP is a sequence of Labels of core network nodes on a path from a source to a sink.

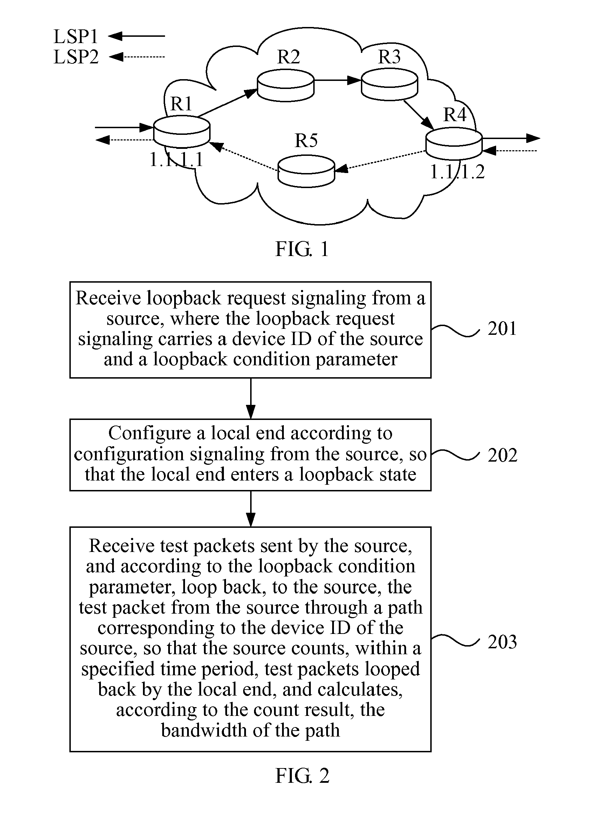

FIG. 1 is a schematic diagram of LSPs in an MPLS network. R1 to R5 are core network nodes, where R1 and R4 are edge devices in the network, and are connected with edge devices in other networks, so as to form different network combinations to implement communication between different networks. 1.1.1.1 is an IP address of R1, and 1.1.1.2 is an IP address of R4. LSP1 marked by solid arrows is composed of sequentially arranged Labels of the core network nodes R1, R2, R3 and R4; and LSP2, reverse to LSP1 and marked by dotted arrows, is composed of sequentially arranged Labels of the core network nodes R4, R5 and R1. The combination of LSP1 and LSP2 in FIG. 1 realizes communication between the core network nodes R1 and R4; definitely, the LSPs that implement communication between the core network nodes R1 and R4 are not limited to the situation in FIG. 1, and the core network nodes that the two LSPs pass by may also be completely the same.

Currently, mainly three methods for evaluating quality of service (Quality of Service, QoS) of the LSP are introduced below: LSP PING command, MPLS OAM (Operation, Administration and Maintenance, operation, administration and maintenance) mechanism, and BFD (Bidirectional Forwarding Detection, bidirectional forwarding detection) protocol.

The LSP PING command, similar to a PING command in the IP, sends a response request data packet to a target host (address), to require the target host (address) to reply after receiving the request, thereby determining a response time of the network and determining whether the local computer is connected to the target host (address).

The MPLS OAM is mainly used to perform connectivity verification on a single LSP. The source sends a CV (Connectivity Verification, connectivity verification) or FFD (Fast Failure Detection, fast failure detection) packet, and the packet reaches the sink through the detected LSP. The sink compares received information fields such as the packet type and frequency with corresponding values recorded locally to determine the correctness of the packet, and counts the numbers of correct packets and error packets received within a detection period, so as to monitor the connectivity of the LSP at any time. When detecting an LSP defect, the sink analyzes the LSP defect to obtain the defect type, and sends a BDI (Backward Defect Indication, backward defect indication) packet of defect information to the source through a reverse channel, so that the source is enabled to learn the defect state in time.

The BFD protocol is a simple "Hello" protocol, and is similar to the neighboring detection part of some well-known routing protocols in many aspects. A pair of systems periodically sends detection packets on a session channel established there-between, and if one system does not receive any detection packet from the peer end in a sufficiently long time, it is considered that a fault occurs in a certain part of the bidirectional channel to the neighboring system.

During the evaluation of the QoS of the LSP, the LSP PING command can merely test whether the target host (address) is reachable, and cannot test the bandwidth of the LSP; the MPLS OAM mechanism and the BFD protocol can merely test whether the LSP is normal, and cannot test the bandwidth of the LSP either.

### SUMMARY

Embodiments of the present invention provide a loopback test method, apparatus and system, to implement test of the bandwidth of an LSP.

To achieve the above objective, the embodiments of the present invention adopt the following technical solutions:

A loopback test method includes: receiving loopback request signaling from a source, where the loopback request signaling carries a device ID of the source and a loopback condition parameter;
configuring a local end according to configuration signaling from the source, so that the local end enters a loopback state; and
receiving test packets sent by the source, and according to the loopback condition parameter, looping back the test packets to the source through a path corresponding to the device ID of the source, so that the source counts, within a specified time period, test packets looped back by the local end, and calculates, according to the count result, the bandwidth of the path.

A loopback test apparatus includes: a first receiving module, configured to receive loopback request signaling sent by a source, where the loopback request signaling carries a device ID of the source and a loopback condition parameter;
a configuration response module, configured to configure a local end according to configuration signaling from the source, so that the local end enters a loopback state;
a second receiving module, configured to receive test packets sent by the source; and a loopback module, configured to, according to the loopback condition parameter, loop back the test packet to the source through a path corresponding to the device ID of the source, so that the source counts, within a specified time period, test packets looped back
by the local end, and calculates, according to the count result, the bandwidth of the path. A loopback test system includes: a first device and a second device. The first device is configured to: send loopback request signaling to the second device, where the loopback request signaling carries a device ID of the first device and a loopback condition parameter; send test packets to the second device, count, within a specified time period, test packets looped back by the second device, and calculate, according to the count result, the bandwidth of a path corresponding to the device ID of the first device. The second device is configured to: configure the local end according to configuration signaling from the first device, so that the local end enters a loopback state; receive the test packet sent by the first device, and according to the loopback condition parameter, loop back the test packet to the source through the path corresponding to the device ID of the first device.

In the loopback test method, apparatus and system provided by the embodiments of the present invention, a receiving end, that is, a local end of test packets may determine, through a device ID of a source in loopback request signaling, a path leading to the source; the local end enters a loopback state through configuration signaling, so that the local end automatically loops back, through the path to the source, a subsequently received test packet from the source; and finally the source may count, within a specified time period, test packets looped back by the local end, and calculate, according to the count result, the bandwidth of the path. Therefore, the problem that the existing

QoS evaluation method cannot test the bandwidth of an LSP can be solved.

### BRIEF DESCRIPTION OF DRAWINGS

To illustrate the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of LSPs in an existing MPLS network;
FIG. 2 is a flow chart of a loopback test method according to Embodiment 1 of the present invention;
FIG. 3 is a block diagram of a loopback test apparatus according to Embodiment 1 of the present invention;
FIG. 4 is a flow chart of a loopback test method according to Embodiment 2 of the present invention;
FIG. 5 is a state transition diagram of a source according to Embodiment 2 of the present invention;
FIG. 6 is a state transition diagram of a sink according to Embodiment 2 of the present invention;
FIG. 7 is a model diagram of an existing pseudo-wire emulation edge to edge network;
FIG. 8 is a model diagram of an existing MPLS-based Layer 3 virtual private network;
FIG. 9 is a block diagram of a loopback test apparatus according to Embodiment 3 of the present invention; and
FIG. 10 is a block diagram of a loopback test system according to Embodiment 1 of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

### Embodiment 1

This embodiment provides a loopback test method, and as shown in FIG. 2, the method includes the following steps. The executor of these steps is a receiving end, that is, a sink, or referred to as a local end of test packets, and may specifically be an edge device in an MPLS network.

201: Receive loopback request signaling from a source, where the loopback request signaling carries a device ID of the source and a loopback condition parameter.

Specifically, when a source needs to initiate a loopback test, the source first generates loopback request signaling, and then sends the signaling to a sink. The loopback request signaling may be expanded LDP (Label Distribution Protocol, label distribution protocol) signaling, or signaling designed according to other protocols supported by a core network node.

The loopback request signaling carries a device ID of the source and a loopback condition parameter, and the device ID of the source is used by the sink to determine a path leading to the source, for example, an LSP or a pseudo wire PW (Pseudo Wire). The device ID of the source may be an IP address that identifies the position of the source in the network.

After receiving the loopback request signaling, the sink may determine whether it supports a loopback function, and if supporting a loopback function, the sink generates a loopback response packet and sends the packet to the source through an LSP leading to the source.

If the source learns in advance that the sink supports a loopback function, the sink may not send a loopback response packet after receiving the loopback request signaling.

202: Configure the local end according to configuration signaling from the source, so that the local end enters a loopback state.

Specifically, after sending the loopback request signaling to the sink or receiving the loopback response packet from the sink, the source generates configuration signaling, and sends the configuration signaling to the sink.

The sink performs configuration operation according to the configuration signaling, and then enters a loopback state, the sink in the loopback state considers that the subsequently received packets sent by the source are all test packets, and according to the loopback condition parameter, the sink loops back the test packets to the source through the path leading to the source.

203: Receive test packets sent by the source, and according to the loopback condition parameter, loop back the test packet to the source through a path corresponding to the device ID of the source, so that the source counts, within a specified time period, test packets looped back by the local end, and calculates, according to the count result, the bandwidth of the path.

Specifically, after sending the configuration signaling to the sink, the source may perform an automatic loopback test on the sink in test packets construction manner, and may also perform a loopback test on the sink by using a packet sending tool, or send the test packet by using other methods which are known to persons skilled in the art.

Because the sink is in the loopback state, the sink loops back, to the source, the test packet from the source according to the loopback condition parameter. The loopback condition parameter may be, for example, a time parameter including a user limited loopback time or a packet number parameter as described in the embodiment hereinafter, and may also include a parameter for authenticating the identity of the packet, or other parameters that are known to persons skilled in the art and capable of ensuring normal implementation of the loopback operation on the source.

The bandwidth of the path in the network refers to the number of data packets transmitted on the path in a certain time period, and therefore, after the source sends the test packets to the sink, an existing traffic analysis tool may be set at the local end, and a time period for analysis is specified, so as to count, within the time period, the test packets looped back by the sink. If all the test packets that are sent by the source and satisfy the loopback condition parameter can be retrieved in the time period, it can be learned according to the definition of the bandwidth that, the number of the test packets that satisfy the loopback condition parameter may represent the bandwidth of the path; and if only a part of the test packets that satisfy the loopback condition parameter are retrieved in the time period, it indicates that packet loss occurs on the path, the number of the received test packets represents the bandwidth of the path, and network performance parameters such as the packet loss rate, delay and jitter may also be acquired.

In the loopback test method provided by this embodiment, the sink may determine, through the device ID of the source in the loopback request signaling, the path leading to the source, and then enter the loopback state through the configuration signaling, so that the sink automatically loops back, through the path to the source, the test packets from the source, and finally the source counts and analyzes, by using the existing traffic analysis tool, the test packets which are looped back by the sink and received within the specified time period, to acquire the bandwidth of the path, and also acquire network performance parameters such as the packet loss rate, delay and jitter. Therefore, the loopback test method provided by this embodiment can solve the problem that the existing QoS evaluation method cannot test the bandwidth of an LSP.

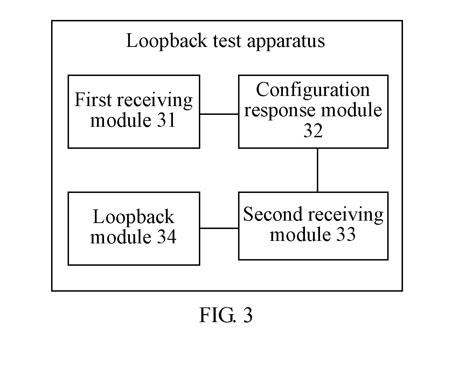

This embodiment further provides a loopback test apparatus, and as shown in FIG. 3, the apparatus includes: a first receiving module 31, configured to receive loopback request signaling sent by a source, where the loopback request signaling carries a device ID of the source and a loopback condition parameter; a configuration response module 32, configured to configure a local end according to configuration signaling from the source, so that the local end enters a loopback state; a second receiving module 33, configured to receive test packets sent by the source; and a loopback module 34, configured to, according to the loopback condition parameter, loop back the test packet to the source through a path corresponding to the device ID of the source, so that the source counts, within a specified time period, test packets looped back by the local end, and calculates, according to the count result, the bandwidth of the path.

The method performed by the foregoing modules is already described in detail above, and will not be repeated herein.

In the loopback test apparatus provided by this embodiment, the sink may determine, through the device ID of the source in the loopback request signaling, the path leading to the source, and then enter the loopback state through the configuration signaling, so that the sink automatically loops back, through the path to the source, the subsequently received test packet sent by the source, and finally the source counts and analyzes, by using the existing traffic analysis tool, the test packets which are looped back by the sink and received within the specified time period, to acquire the bandwidth of the path, and also acquire network performance parameters such as the packet loss rate, delay and jitter. Therefore, the loopback test apparatus provided by this embodiment can solve the problem that the existing QoS evaluation method cannot test the bandwidth of an LSP.

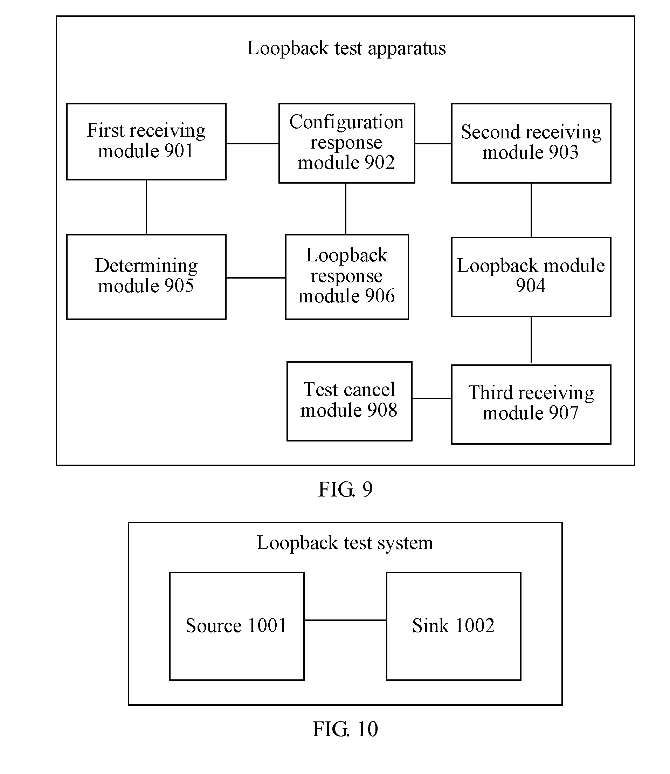

This embodiment further provides a loopback test system, and as shown in FIG. 10, the system includes: a source 1001 and a sink 1002. The source 1001 is configured to: send loopback request signaling to the sink 1002, where the loopback request signaling carries a device ID of the source 1001 and a loopback condition parameter; send test packets to the sink 1002, count, within a specified time period, test packets looped back by the sink 1002, and calculate, according to the count result, the bandwidth of a path corresponding to the device ID of the source 1001. The sink 1002 is configured to: configure the local end according to configuration signaling from the source 1001, so that the local end enters a loopback state; receive the test packet sent by the source 1001, and according to the loopback condition parameter, loop back the test packet to the source 1001 through the path corresponding to the device ID of the source 1001.

The method performed by the system is already described in the illustration of the loopback test method, and is not repeated herein; because the system adopts the foregoing loopback test method, the problem that the existing QoS evaluation method cannot test the bandwidth of an LSP can be solved.

### Embodiment 2

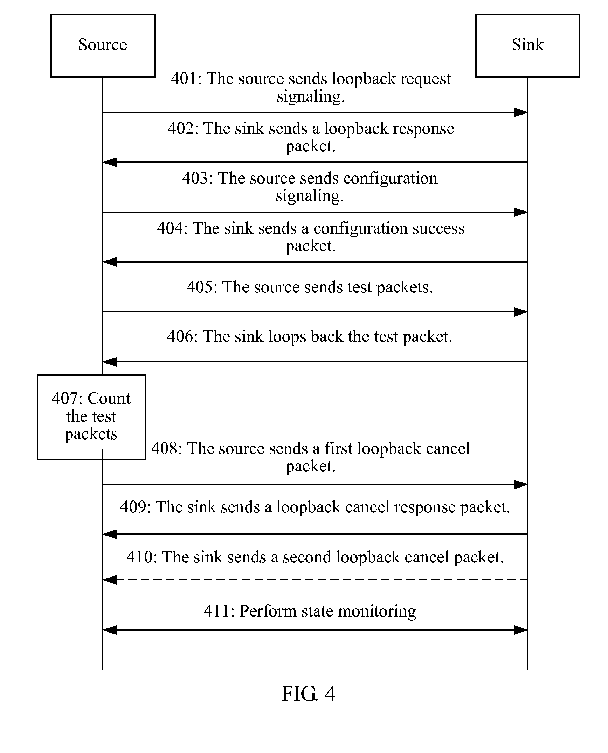

This embodiment provides a loopback test method, and as shown in FIG. 4, the method includes the following steps. A source and a sink may be edge devices in an MPLS network.

401: The source sends loopback request signaling.

Specifically, when the source needs to initiate a loopback test, the source first generates loopback request signaling, and then sends the signaling to the sink. The loopback request signaling may be expanded LDP signaling, or signaling designed according to other protocols supported by a core network node.

The loopback request signaling carries a device ID of the source, and the device ID may be address information. The sink may find, through the device ID of the source in the received loopback request signaling, a path leading to the source, for example, an LSP or a pseudo wire PW. The source may find a path leading to the sink through a device ID of the sink, and the device ID of the sink may be already learned, or may be acquired through signaling. The loopback request signaling further carries a loopback condition parameter to be used in the loopback test.

After receiving the loopback request signaling, the sink may determine whether the local end supports a loopback function. When it is determined that the local end supports a loopback function, step 402 is performed; and when it is determined that the local end does not support a loopback function, no operation is performed, that is, no response is made to the loopback request signaling. If the source learns in advance that the sink supports a loopback function, the sink may not send a loopback response packet after receiving the loopback request signaling.

If the source does not learn in advance that the sink supports a loopback function, when a fault occurs in the network between the source and the sink, or the sink does not support a loopback function, the source, after sending the loopback request signaling, may not receive a response packet from the sink; and to ensure the normal working state of the source, a timer may be set at the source and is started when the source sends the loopback request signaling.

After the timer times out, if the source does not receive a loopback response packet sent by the sink, it indicates that the loopback test with the sink cannot be carried on, and the source will cancel the loopback test. If a loopback response packet sent by the sink is received before the timer times out, the timer is reset, and when timing stops, the source performs subsequent operation.

402: The sink sends a loopback response packet.

Specifically, after receiving the loopback request signaling sent by the source, the sink first determines whether the local end device supports a loopback function, and if the local end device supports a loopback function, the sink generates a loopback response packet and sends the packet to the source through an LSP leading to the source; while if the local end device does not support a loopback function, the sink does not perform any operation.

403: The source sends configuration signaling.

Specifically, after sending the loopback request signaling to the sink or receiving the loopback response packet, the source sends configuration signaling to the sink that supports a loopback operation, so as to perform configuration on the sink and enable the sink to enter a loopback state. 404: The sink sends a configuration success packet.

Specifically, the sink in the loopback state may consider all the subsequently received packets sent by the source as test packets, and then, according to the requirement of the loopback condition parameter, loop back the test packets to the source through a path leading to the source. After completing the configuration operation, the sink may generate a configuration success packet, and sends the packet to the source through the path leading to the source.

405: The source sends test packets.

Specifically, after sending the configuration signaling to the sink or receiving the configuration success packet, the source sends test packets to the sink for carrying out a loopback test. The source may perform an automatic loopback test on the sink in test packets construction manner, and may also perform a loopback test on the sink by using a packet sending tool, or send the test packet by using other methods which are known to persons skilled in the art.

406: The sink loops back the test packet.

Specifically, the sink after configuration and in the loopback state may consider all the packets from the source as test packets, and loop back the test packets to the source according to the requirement of the loopback condition parameter.

407: Count the test packets.

Specifically, after the source sends the test packets to the sink, an existing traffic analysis tool may be set at the local end, and a time period for analysis is specified, so as to count, within the time period, the received test packets looped back by the sink. If all the test packets that satisfy the loopback condition parameter can be retrieved in the time period, the number of the test packets that satisfy the loopback condition parameter may represent the bandwidth of the LSP; and if only a part of the test packets that satisfy the loopback condition parameter are retrieved in the time period, it indicates that packet loss occurs on the LSP, the number of the received test packets represents the bandwidth of the LSP, and by counting the number of the received test packets, network performance parameters such as the packet loss rate, delay and jitter may also be analyzed.

It should be noted that, this embodiment may further include, but not limited to, steps 608 and 609, and through steps 408 and 409, the source may actively cancel the loopback test.

408: The source sends loopback cancel signaling.

Specifically, when the source needs to cancel the loopback test, the source may send loopback cancel signaling to the sink to actively cancel the loopback test.

409: The sink sends a loopback cancel response packet.

Specifically, after receiving the loopback cancel signaling, the sink terminates the test operation, and sends a loopback cancel response packet to the source. The source receives the loopback cancel response packet, and terminates the loopback test operation.

It should be further noted that, if the source does not send the loopback cancel signaling in time or the sink does not receive the loopback cancel signaling due to a network fault, the source and the sink may stay in a test state for a long time, which affects normal working of the network. To further ensure that the loopback test is reliably cancelled, this embodiment may further include, but not limited to, step 410.

410: The sink sends timeout loopback cancel signaling.

Specifically, the sink sends timeout loopback cancel signaling to the source. The source receives the signaling and then cancels the test operation. The timeout loopback cancel signaling may be generated when the sink determines that the number of the received test packets is greater than the number of loopback packets carried in the loopback request signaling; or generated when the sink determines that the duration of the loopback already performed is greater than loopback duration carried in the loopback request signaling. The sink cancels the loopback test operation at the local end when sending the timeout loopback cancel signaling to the source.

The number of loopback packets and the loopback duration are set in the loopback condition parameter. The number of loopback packets is a quantity threshold. When performing test packet loopback operation, the sink may count the number of test packets that are already looped back, and when the number of the counted test packets exceeds the quantity threshold, the sink terminates the test operation. The loopback duration is a time threshold. When starting to perform test packet loopback operation, the sink may time the loopback operation, and when the duration of the loopback operation exceeds the time threshold, the sink also terminates the test operation. When the sink satisfies any one of the two test operation termination conditions, and after terminating the test operation, the sink sends timeout loopback cancel signaling to the source. Therefore, it ensures that the loopback test is reliably cancelled.

It should be further noted that, in a process of performing a loopback test between the source and the sink, to prevent a fault of the source or sink from affecting the accuracy of the test result, this embodiment may further include, but not limited to, step 411.

411: Perform state monitoring.

Specifically, this step is bidirectional. Starting from sending the loopback request signaling, the source periodically sends a state monitoring message to the sink, and after receiving the state monitoring message sent by the source, if the state is normal, the sink sends a state response message to the source.

If the source receives, in a monitoring period, the state response message sent by the sink, the source determines that the sink is in a normal loopback state; and if the source does not receive, in a monitoring period, the state response message sent by the sink, the source determines that the sink is in a non-normal loopback state, and cancels the loopback test operation.

Starting from receiving the loopback request signaling, the sink periodically sends a state monitoring message to the source, and after receiving the state monitoring message sent by the sink, if the state is normal, the source sends a state response message to the sink.

If the sink receives, in a monitoring period, the state response message sent by the source, the sink determines that the source is in a normal loopback state; and if the sink does not receive, in a monitoring period, the state response message sent by the source, the sink determines that the source is in a non-normal loopback state, and cancels the loopback test operation.

The loopback condition parameter may further include, but not limited to, a loopback packet characteristic value; after receiving the loopback packet characteristic value, in a process of looping back the test packets, the sink may loop back test packets, containing characteristic values the same as the loopback packet characteristic value, in the test packets to the source. The loopback packet characteristic value may be a protocol number in an IP header field, may also be a source mac (Media Access Control) address (hardware address) or a destination mac address of a Layer 2 packet, and may also be a port number in a TCP (Transmission Control Protocol, transmission control protocol) or UDP (User Datagram Protocol, user datagram protocol) and the like.

The loopback packet characteristic value is set in the loopback condition parameter, so that the sink can not only identify, through the IP address in the test packet, that the test packet is sent by a specified source, but can also determine, through the protocol number in the IP header field, the source mac address or the destination mac address and the like, which is in the test packet and is the same as the loopback packet characteristic value, that the test packet is sent by a specified source. The specified source is determined through the device ID of the source in the loopback request signaling.

The loopback request signaling may further carry, but not limited to, a security control identifier. After receiving the security control identifier, the sink may perform identity authentication on the source according to the security control identifier, to prevent the sink from being attacked by an unauthorized source and entering a loopback state. If the authentication succeeds, it indicates that the source is an authorized source and the sink may receive the loopback request signaling sent by the source and perform loopback operation; while if the authentication fails, it indicates that the source is an unauthorized source, and the sink may discard the received loopback request signaling and does not perform subsequent loopback operation. The identity authentication step is performed after the loopback request signaling is received and before it is determined whether the local end supports a loopback function.

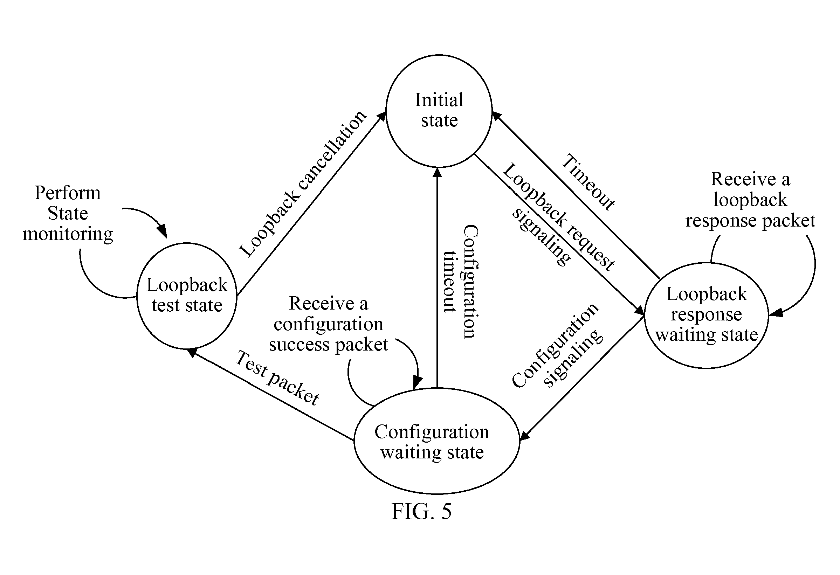

The source undergoes the state transition shown in FIG. 5 when performing the loopback test method. After the source in an initial state sends loopback request signaling to the sink, the source transits from the initial state to a loopback response waiting state, and meanwhile starts the timer for timeout protection. If the source still does not receive a loopback response packet sent by the sink after the timer times out, the source transits from the loopback response waiting state to the initial state.

After the source in the loopback response waiting state receives a loopback response packet sent by the sink, the source sends configuration signaling to the sink, and then transits to a configuration waiting state. When the source in the configuration waiting state does not receive a configuration success packet sent by the sink for a long time, the source transits to the initial state, and if the source receives a configuration success packet sent by the sink, the source sends test packets to the sink, transits to a loopback test state, and starts state monitoring.

When the source in the loopback test state monitors that the sink is in a non-normal loopback state or receives loopback cancel signaling sent by the sink, or the source actively cancels a loopback cancel response packet which is sent by the sink and received after the loopback test, the source transits to the initial state.

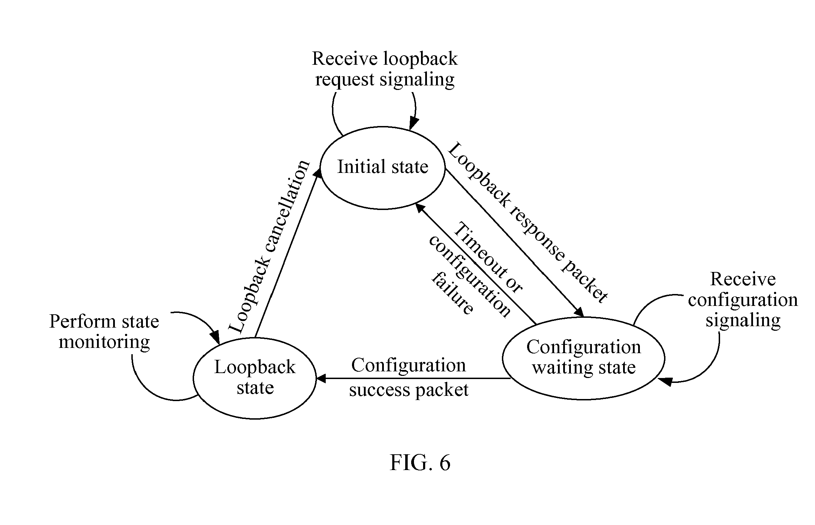

The sink undergoes the state transition shown in FIG. 6 when performing the loopback test method. After the sink in the initial state receives loopback request signaling sent by the source, if the sink supports the loopback operation or the identity authentication of the sink succeeds, the sink sends a loopback response packet to the source and transits to the configuration waiting state. If the configuration fails or the sink does not receive configuration signaling sent by the source for a long time, the sink transits to the initial state.

If the sink in the configuration waiting state receives the configuration signaling sent by the source and successfully performs corresponding configuration, the sink sends a configuration success packet to the source, transits to a loopback state, and starts state monitoring. When the sink in the loopback state monitors that the source is in the non-normal loopback state or receives loopback cancel signaling sent by the source, or determines that the number of the test packets exceeds the quantity threshold, or determines that the duration of the loopback is greater than the time threshold, the sink cancels the loopback, and transits to the initial state.

In the loopback test method provided by this embodiment, the sink may determine, through the device ID of the source in the loopback request signaling, the path leading to the source, and then enter the loopback state through the configuration signaling, so that the sink automatically loops back, through the path to the source, the subsequently received test packet sent by the source, and finally the source may count, within the specified time period, the test packets looped back by the sink, and calculate, according to the count result, the bandwidth of the path. Therefore, the problem that the existing QoS evaluation method cannot test the bandwidth of an LSP can be solved. Further, in the loopback test method, the source may also analyze the network delay by recording the time that the test packets looped back by the sink are received.

The loopback test method may further implement state monitoring of the source and the sink in the test process, to ensure reliable operation of the test. The method may also implement analysis of the receiving and sending conditions of a certain type of packets in the test packets, and can prevent an unauthorized source from attacking the sink.

It should be noted that, the path in the loopback test method may be an LSP or a PW, or any other path that is between addressable network nodes and known to persons skilled in the art, for example, a path between an AC (Access Circuit, access circuit) and an AC or a path between an AC and a PE (Provider edge, provider edge) in a PWE3 (Pseudo-Wire Emulation Edge to Edge, pseudo-wire emulation edge to edge) network; or a path between a CE (Customer edge, customer edge) and a PE or a path between a CE and a CE in an MPLS L3 VPN (MPLS-based Layer 3 virtual private network).

The specific implementation of the loopback test method in the PWE3 technology and the MPLS L3 VPN technology is illustrated below, and the two technologies are both developed on the basis of the MPLS.

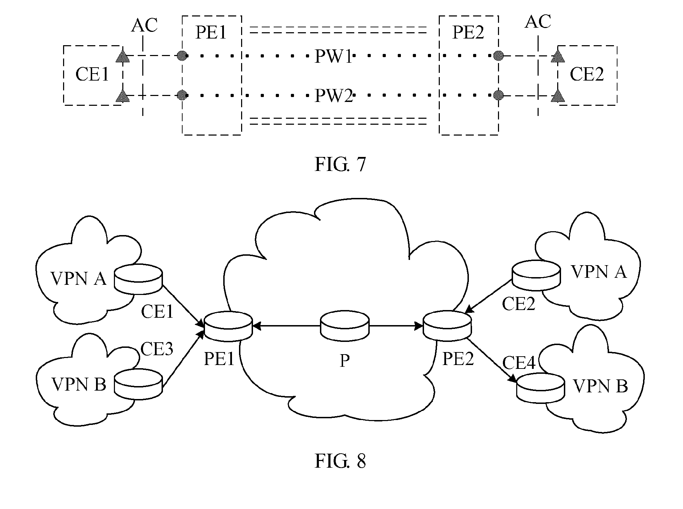

The PWE3 is an end-to-end Layer 2 service bearing technology, and belongs to a point-to-point L2 VPN (Level 2 Virtual Private Network, Level 2 virtual private network); a network model of the PWE3 is shown in FIG. 7. Two PEs may transparently transmit various types of Layer 2 data packets, bit streams and the like through the PW With connection between the AC and the PE, Layer 2 data in the network where the CE resides may be transmitted on the PW through the AC and the PE.

The source and the sink in the loopback test method of this embodiment may be two ends of the PW (marked by filled circles in FIG. 7) and may also be ACs (marked by filled triangles in FIG. 7), so that the loopback of the test packets may be implemented on the PW and may also be implemented between two ACs.

The loopback of the test packets on the PW is similar to the LSP loopback described in Embodiment 1 and this embodiment. As for the loopback of the test packets on the AC, the source must learn in advance physical information (for example, frame, slot, and port) of the sink AC and address information (for example, IP address) of the sink PE connected to the sink AC, and by sending AC request signaling to the sink PE, requires the sink PE to feed back the physical information of the sink AC and the address information of the sink PE. After receiving the foregoing information, the source performs the LSP loopback similar to that described in Embodiment 1 and this embodiment. If the source is the PE, the device ID of the source in the loopback request signaling is the IP address of the PE device; and if the source is the AC, the device ID of the source is the physical information of the AC and the IP address of the PE connected to the AC.

The MPLS L3 VPN is an MPLS-based Layer 3 VPN technology. The MPLS provides a simple, flexible and efficient tunnel mechanism for implementation of the VPN, and establishes an LSP between different sites of the VPN in a core network of the provider, so as to transfer private network packets of the VPN through the core network. FIG. 8 shows a network model of the MPLS L3 VPN. The private network packets of the VPN are transparently transmitted on the LSP established between two PEs through the CE, and the P (Provider, provider core router) in the core network does not need to learn the information of the VPN network, thereby reducing the load of the P.

The source and the sink in the loopback test method of this embodiment may be PEs at two ends of the LSP, and may also be CEs, so that the loopback of the test packets may be implemented on the LSP and may also be implemented between two CEs.

The loopback of the test packets between the PE1 and the PE2 is implemented based on the LSP, and is the same as the loopback test method performed on the LSP. If the loopback of the test packets is to be performed on the CE, the source must learn in advance that the IP address of the sink CE and the IP address of the sink PE connected to the sink CE, and the other steps are the same as those in the loopback test method of this embodiment. If the source is the PE, the device ID of the source in the loopback request signaling is the IP address of the PE device; if the source is the CE and the sink is the PE, the device ID of the source is the IP address of the CE and information of the VPN where the CE resides (for example, a private network label); and if the source is the CE and the sink is the peer CE, the device ID of the source is the IP address of the source CE, and the reason why the information of the VPN where the source CE resides is not needed is that because the loopback request signaling can reach the VPN where the peer CE resides, the loopback request signaling is surely sent by the source CE.

For example, referring to FIG. 8, if the source is the PE1, no matter whether the sink is the PE2 or CE2, the device ID of the source in the loopback request signaling is the IP address of the PE1 device; if the source is the CE1 and the sink is the PE2, the device ID of the source is the IP address of the CE1 and information of the VPN where the CE1 resides; and if the source is the CE1 and the sink is the CE2, the device ID of the source is the IP address of the CE 1.

### Embodiment 3

This embodiment provides a loopback test apparatus, and as shown in FIG. 9, the apparatus includes: a first receiving module 901, configured to receive loopback request signaling from a source, where the loopback request signaling carries a device ID of the source and a loopback condition parameter; a configuration response module 902, configured to configure a local end according to configuration signaling from the source, so that the local end enters a loopback state; a second receiving module 903, configured to receive test packets sent by the source; a loopback module 904, configured to: according to the loopback condition parameter, loop back the test packet to the source through a path corresponding to the device ID of the source, so that the source counts, within a specified time period, test packets looped back by the local end, and calculates, according to the count result, the bandwidth of the label switched path.

The apparatus may further include, but not limited to, a determining module 905, configured to determine whether the local end supports a loopback function; and a loopback response module 906, configured to: when the determining module determines that the local end supports a loopback function, send a loopback response packet to the source through the label switched path leading to the source.

The apparatus may further include, but not limited to, a third receiving module 907, configured to receive loopback cancel signaling sent by the source; and a test cancel module 908, configured to, according to the loopback cancel signaling, cancel the loopback test and send a loopback cancel response packet to the source.

The method performed by the foregoing modules is already described in detail in Embodiment 2, and is not repeated herein.

In the loopback test apparatus provided by this embodiment, the sink supporting loopback operation receives signaling through the first receiving module and the configuration response module, determines, according to the signaling, a path leading to the source and performs loopback configuration, and then enters the loopback state, so that the loopback module may automatically loop back, to the source through the path leading to the source, the test packets sent by the source to the sink, and the source counts and analyzes, by using an existing traffic analysis tool within a fixed time period, the received test packets looped back by the sink, to acquire the bandwidth of the path. Therefore, the loopback test apparatus provided by this embodiment can solve the problem that the existing QoS evaluation method cannot test the bandwidth of an LSP.

In the loopback test apparatus provided in this embodiment, the third receiving module and the test cancel module can ensure that the loopback test is reliably cancelled.

Through the above description of the embodiments, it is apparent to persons skilled in the art that the present invention may be accomplished by software on necessary universal hardware, and definitely may also be accomplished by hardware, but in most cases, the present invention is preferably implemented through the former method. Therefore, the technical solution of the present invention or the part that makes contributions to the prior art can be substantially embodied in the form of a software product. The computer software product is stored in a readable storage medium such as a floppy disk, a magnetic disk or an optical disk of a computer, and contains several instructions to instruct a computer equipment (for example, a personal computer, a server, or a network equipment) to perform the method described in the embodiments of the present invention. The embodiment of the present invention is mainly applied in an MPLS network where VPN services are developed.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A loopback test method, comprising:
receiving loopback request signaling from a source, wherein the loopback request signaling carries a device ID of the source and a loopback condition parameter;
configuring a local end to enter a loopback state according to configuration signaling from the source; and
receiving, test packets sent by the source, and
looping back, the test packets to the source through a path corresponding to the device ID of the source according to the loopback condition parameter, wherein the looped back test packets are sent to the source to count a count result within a specified time period and calculate, according to the count result, bandwidth of the path.

2. The method according to claim 1, wherein after the receiving the loopback request signaling sent by the source, the method further comprises:
determining whether the local end supports a loopback function; and
if it is determined that the local end supports a loopback function, sending a loopback response packet to the source through the path corresponding to the device ID of the source.

3. The method according to claim 1, wherein the loopback condition parameter comprises the number of the loopback test packets and a loopback duration.

4. The method according to claim 3, further comprising:
if the number of the received test packets is greater than the number of the loopback packets, or, if the duration of loopback already performed is greater than the loopback duration, canceling the loopback test and sending timeout loopback cancel signaling to the source.

5. The loopback test method according to claim 3, wherein the loopback condition parameter further comprises a loopback packet characteristic value, and
The process of looping back the test packets to the source through the path corresponding to the device ID of the source according to the loopback condition parameter comprises:
looping back, test packets containing a characteristic value the same as the loopback packet characteristic comprised in the loopback condition parameter to the source through the path corresponding to the device ID of the source.

6. The loopback test method according to claim 1, wherein the loopback request signaling further carries a security control identifier, and
after the receiving the loopback request signaling sent by the source, the method further comprises:
performing identity authentication on the source according to the security control identifier.

7. The loopback test method according to any one of claims 1 to 6, further comprising:
sending a state monitoring message to the source; and
if receiving a state response message sent by the source in a monitoring period, determining that the source is in a normal loopback state; otherwise, canceling the loopback test.

8. The method according to claim 7, wherein the path comprises a label switched path, LSP, or a pseudo wire, PW.

9. A loopback test apparatus, comprising:
a first receiving module, configured to receive loopback request signaling sent by a source, wherein the loopback request signaling carries a device ID of the source and a loopback condition parameter;
a configuration response module, configured to configure a local end to enter a loopback state according to configuration signaling from the source;
a second receiving module, configured to receive test packets sent by the source; and
a loopback module, configured to loop back the test packets to the source through a path corresponding to the device ID of the source according to the loopback condition parameter,; wherein the looped back test packets are sent to the source to count a count result within a specified time period and calculate, according to the count result, bandwidth of the path.

10. The loopback test apparatus according to claim 9, further comprising:
a determining module, configured to determine whether the local end supports a loopback function; and
a loopback response module, configured to send a loopback response packet to the source through the path if the local end supports the loopback function.

11. The loopback test apparatus according to claim 9, further comprising:
a third receiving module, configured to receive loopback cancel signaling sent by the source; and
a test cancel module, configured to, according to the loopback cancel signaling, cancel the loopback test and send a loopback cancel response packet to the source.

12. A loopback test system, comprising a first device and a second device, wherein
the first device is configured to: send loopback request signaling to the second device, wherein the loopback request signaling carries a device ID of the source and a loopback condition parameter; send test packets to the second device, count the test packets looped back by the second device to acquire a count result within a specified time period, and calculate bandwidth of the path corresponding to the device ID of the first device according to the count result; and
the second device is configured to: configure the local end to enter a loopback state according to configuration signaling from the first device; receive the test packets sent by the first device, and loop back the test packets to the first device from the first device through the path corresponding to the device ID of the first device according to the loopback condition parameter.
